# EUROPEAN PATENT APPLICATION

(11) **EP 3 511 214 A1**
(43) Date of publication of application: **17.07.2019**
(21) Application number: 18151054.6
(22) Date of filing: 10.01.2018
(51) Int. Cl.: B60T 8/18

(54) **AIR BRAKE SYSTEM WITH A LOAD SENSING VALVE**

(71) Applicant: WABCO Europe BVBA, 1170 Brussels (BE)
(72) Inventor: Klock, Hendrik Jan, 8051 SK Hattem (NL); Postma, Maarten Louis, 2914 AG Nieuwerkerk aan den IJssel (NL)
(74) Representative: Krause, Martin

(57) **Abstract**

Provided are an air brake system (10) of a vehicle (12) and a load sensing kit (46) for an air brake system (10) of an unsuspended vehicle (12). The air brake system and the load sensing kit both comprise a load sensing valve (22), wherein a load sensing port (22c) of the load sensing valve (22) is connected to an electro-pneumatic valve (32) that is controlled in accordance with a measured load of the vehicle (12).

The invention further provides a method of adjusting a braking force to be applied to a wheel (16) of a vehicle (12) upon braking to a vehicle load.

## Description

### Technical Field

The present invention relates to air brake systems for vehicles. In particular, the present invention relates to air brake systems with load sensing valves.

### Background Art

Air brake systems with load sensing valves allow adjusting a braking force to a vehicle load. The adjustment can be achieved in a variety of ways, e.g. by a mechanical linkage responsive to a suspension loading or by fluid means responsive to a pressure of a fluid in a pneumatic or hydraulic suspension system.

### Disclosure of Invention

The present invention provides an air brake system with a load sensing valve, wherein a load sensing port of the load sensing valve is connected to a valve (e.g., an electro-pneumatic valve) that is controlled in accordance with a measured load.

In accordance with the present invention, an air brake system for braking a vehicle comprises a pneumatic actuator for braking a wheel of the vehicle, and a load sensing valve for adapting a braking force to a load of the vehicle, wherein the load sensing valve has an inlet port connected to a control line, an outlet port connected to a control port of a relay valve or the pneumatic actuator, and a load sensing port for controlling a difference in pressure between the inlet port and the outlet port, based on the load of the vehicle, wherein the load sensing port is connected to an electro-pneumatic valve which is configured to control a pressure at the load sensing port based on a signal from a load measuring device.

As used throughout the description and claims, the term "air brake system" particularly relates to an arrangement including one or more friction brakes, wherein compressed air is used to actuate the friction brake(s). Moreover, as used throughout the description and claims, the term "braking force" particularly relates to a force applied to a friction brake for braking one or more wheels of the vehicle during actuation of the brake. Furthermore, as used throughout the description and claims, the term "wheel" particularly relates to a circular component that rotates on an axle bearing. In addition, as used throughout the description and claims, the term "vehicle" particularly relates to a motor vehicle or trailer with one, two, or more axles (and one or more wheels per axle side).

As used throughout the description and claims, the term "pneumatic actuator" particularly relates to a device for applying air pressure to an element to enforce a movement of the element relative to another element (e.g., a linear movement between the elements). Moreover, as used throughout the description and claims, the term "load sensing valve" particularly relates to a valve that exhibits a difference in pressure between an inlet port and an outlet port of the valve, wherein the difference (inversely) correlates (or is intended to inversely correlate) with the vehicle load (e.g., a high vehicle load results in a small difference and a small vehicle load results in a large difference). Notably, the terms "inlet port" and "outlet port", as used throughout the description and claims, are intended to encompass, but are not limited to, the usage of directional valves. I.e., air may flow from an inlet port to an outlet port of a valve, but the direction of the air flow may be reversed, e.g., if a change in the state of the system occurs.

As used throughout the description and claims, the term "load" particularly relates to a weight of a (loaded or unloaded) vehicle that acts upon the wheel, or one, two, or more axles during braking. As the goods may not be evenly spread over the vehicle platform and a front axle may experience more load than a back axle during braking, the braking force of each wheel brake, each axle side, or each axle may be adapted independently. If adapting the braking force of each wheel brake, each axle side, or each axle independently is not desired, the braking force of all wheel brakes may be adapted similarly. Moreover, as used throughout the description and claims, the term "port" particularly relates to a passage that allows fluid to pass in/out of a valve.

As used throughout the description and claims, the term "control line" particularly relates to a tube or pipe, the pressure in which is being controlled by actuating a brake pedal. Moreover, as used throughout the description and claims, the term "electro-pneumatic valve" particularly relates to a device that allows controlling the flow of a fluid through the valve by electronic means. Furthermore, as used throughout the description and claims, the term "measuring device" particularly relates to a sensor or a sensor and a processing unit such as, for example, a microcontroller, that produces an electric signal representing the measured load.

In an embodiment, the air brake system further comprises a reservoir for storing compressed air and the relay valve for applying and releasing the pneumatic actuator, wherein the relay valve is arranged between the reservoir and the pneumatic actuator and has the control port for controlling a flow of compressed air from the reservoir to the pneumatic actuator.

As used throughout the description and claims, the term "reservoir" particularly relates to one or more storage tanks having a cross-section which is substantially larger than the cross-section of the tubes/pipes through which air is fed to the reservoir. Moreover, as used throughout the description and claims, the term "relay valve" particularly relates to a valve which allows controlling the fluid flow through the valve by a pressure applied to control port of the relay valve, without, however, providing a fluidic connection between the control port and the fluid flow.

Accordingly, a flow of air through the load sensing valve can be reduced as compared to systems in which the load sensing valve is directly connected to the pneumatic actuator.

In an embodiment, the electro-pneumatic valve has an inlet port connected to the reservoir and an outlet port connected to the load sensing port.

Accordingly, load sensing is available as long as the reservoir not exhausted.

In an embodiment, the electro-pneumatic valve is a proportional valve.

Accordingly, a substantial constant pressure upstream the proportional valve will ensure a precise adjustment.

In an embodiment, the load sensing valve allows controlling the relay valve and/or applying the pneumatic actuator, even if the load sensing port is disconnected from the electro-pneumatic valve.

Accordingly, the adjustment is fail-safe to disconnects of the load sensing port from the electro-pneumatic valve.

In an embodiment, the air brake system is comprised in an nonsuspended vehicle.

Accordingly, an nonsuspended vehicle can be provided with a system that allows adjusting the braking force to the load of the vehicle.

In an embodiment, the nonsuspended vehicle is an nonsuspended trailer.

Accordingly, an nonsuspended trailer (e.g., an agricultural trailer) can be provided with a system that allows adjusting the braking force to the load of the trailer. The term "nonsuspended" as used throughout the specification means, that the axle or the plurality of axles of the vehicle does not have a suspension with damping means like steel springs or air springs. Such a configuration is typical for trailers used in the fields of agriculture.

In an embodiment, the reservoir and the control line are coupleable to a supply line and a control line, respectively, of a towing vehicle.

Accordingly, the trailer does not require a compressor.

In accordance with the present invention, a load sensing kit for an air brake system of an nonsuspended vehicle comprises a load sensing valve with an inlet port that is coupleable to a control line, an outlet port that is coupleable to a control port of a relay valve or a pneumatic actuator, and a load sensing port for controlling a difference in pressure between the inlet port and the outlet port, based on a load of a vehicle, and an electro-pneumatic valve for controlling a pressure at the load sensing port based on a signal from a load measuring device.

As used throughout the description and claims, the term "kit" particularly relates to an upgrade kit containing the parts and instructions for upgrading, e.g., for upgrading an air brake of a vehicle to allow adjusting the braking force to the load of the vehicle.

In an embodiment, the load sensing kit further comprises the load measuring device, wherein the load measuring device is configured to measure a load and generate the signal, the signal representing the measured load.

If a load measuring sensor is available, the load measuring device may be used as a converter for converting the sensor output to the signal required by the kit.

In accordance with the present invention, a method of adjusting a braking force to be applied to a wheel of a vehicle upon braking the vehicle, to a vehicle load, comprises measuring the vehicle load and adjusting the braking force based on the measured load, wherein adjusting the braking force based on the measured load comprises converting an electrical signal representing the measured load to a pressure applied to a control port of a load sensing valve of an air brake system of the vehicle.

In an embodiment, adjusting the braking force comprises changing a braking force resulting from a same actuation of a brake pedal of the vehicle or a towing vehicle towing the vehicle.

Accordingly, a higher loaded vehicle can be decelerated faster while a lesser loaded vehicle is prevented from blocking wheels.

In an embodiment, adjusting the braking force comprises changing a gradient of a conversion between an actuation of a brake pedal of the vehicle or a towing vehicle towing the vehicle, and the braking force.

Accordingly, the load influence can be partially compensated, and a similar braking behavior can be achieved over different loads.

In an embodiment, measuring the vehicle load comprises measuring a fill level of the vehicle.

For example, the mass of the loaded solid/liquid may be calculated by multiplying the filled volume with the specific mass.

In an embodiment, the air brake system of the vehicle comprises the load sensing kit.

It will be appreciated that the features and attendant advantages of the disclosed system/kit may be realized by the disclosed method and vice versa.

### Brief Description of Drawings

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.

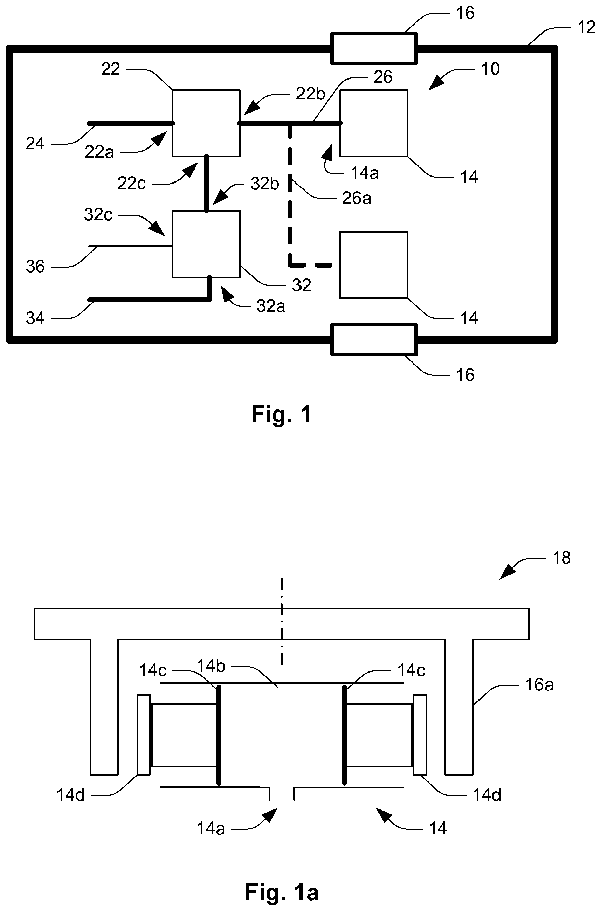

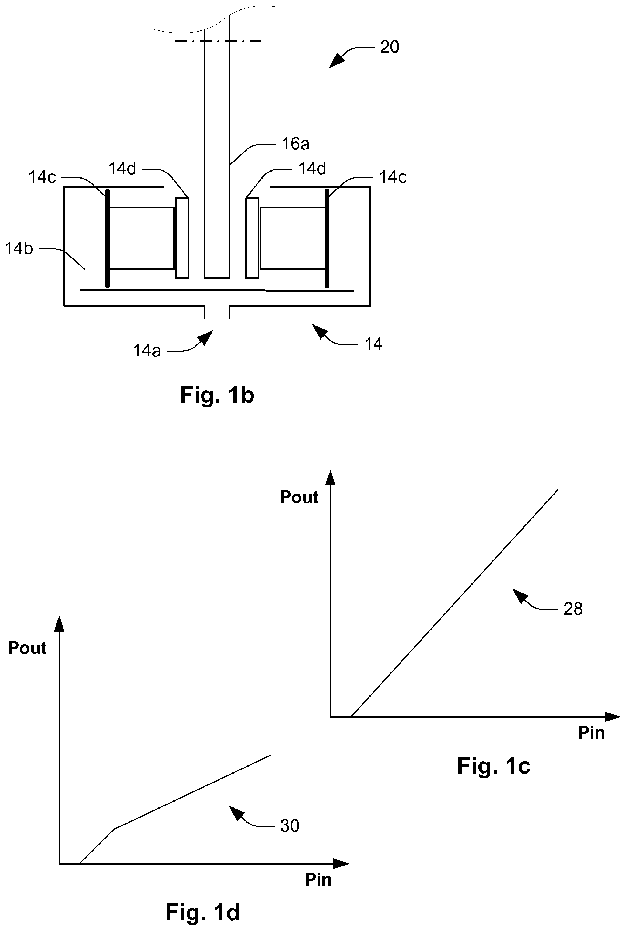

Fig. 1 schematically illustrates elements of an air brake system, according to an example;
Fig. 1 a schematically illustrates a friction brake of the air brake system, according to an example;
Fig. 1b schematically illustrates a friction brake of the air brake system, according to an example;
Fig. 1c illustrates an operation of the load sensing valve of the air brake system for a high vehicle load, according to an example;
Fig. 1d illustrates an operation of the load sensing valve of the air brake system for small vehicle load, according to an example;
Fig. 2 schematically illustrates elements of an air brake system, according to an example;
Fig. 3 schematically illustrates elements of a load sensing kit for an air brake system, according to an example;
Fig. 3a schematically illustrates further elements of a load sensing kit for an air brake system, according to an example; and
Fig. 4 shows a flow chart of a method of adjusting a braking force which is to be applied to a wheel of a vehicle upon braking the vehicle, to a vehicle load.

Notably, the drawings are not drawn to scale and unless otherwise indicated, they are merely intended to conceptually illustrate the structures and procedures described herein.

### Modes for Carrying Out the Invention

As shown in Fig. 1, an air brake system 10 for braking a vehicle 12 (e.g., a trailer with a single axle) may comprise a pneumatic actuator 14 for braking a wheel 16 of the vehicle 12. As illustrated in Fig. 1a, the pneumatic actuator 14 may comprise a chamber 14b (e.g., a brake cylinder) with a movable piston 14c. When air is flown into the chamber 14b (through the port 14a), the piston 14c forces non-rotating friction elements 14d (e.g., brake shoes) against a rotating friction element 16a (e.g., a drum). The friction between the friction elements 14d, 16a results in a braking force applied upon the wheel 16 to which the rotating friction element 16a is connected/ attached. Depending on its magnitude, the braking force reduces the rotational speed of the wheel 16 upon braking. Notably, an anti-lock braking system may modulate the braking force to limit the slippage of the wheel 16, if the braking force becomes too high.

As illustrated in Fig. 1b, the pneumatic actuator 14 of the air brake system 10 may (instead of being part of a drum brake 18 as illustrated in Fig. 1a) also be part of a disc brake 20. The disc brake 20 may comprise brake pads (which serve as the non-rotating friction elements 14d) that are forced against a disc (serving as the rotating friction element 16a). If the structure that houses the chamber 14b can move axially, one of the pistons 14c can be replaced with a static structure providing a support for the friction element 14d. Furthermore, the pneumatic actuator 14 is not limited to being part of a drum brake 18 or a disc brake 20, but may be employed in other types of friction brakes. Moreover, the pneumatic actuator 14 may comprise further elements such as, for instance, a resilient element (e.g., a spring) to release the brake 18, 20 when the pressure within the chamber 14b is reduced.

Continuing with Fig. 1, the air brake system 10 may comprise a load sensing valve 22 for adapting a braking force to a load of the vehicle 12. The load sensing valve 22 has an inlet port 22a connected to a control line 24, an outlet port 22b connected to the pneumatic actuator 14 via an air line 26, and a load sensing port 22c. The load sensing port 22c allows controlling a difference in pressure between the inlet port 22a and the outlet port 22b, as illustrated in Fig. 1c and Fig. 1d. In particular, Fig. 1c depicts the pressure at the outlet port 22b over the pressure at the inlet port 22a for a maximum load (i.e., a pressure at the load sensing port 22c at or above an upper limit). As can be seen from graph 28, the pressure at the outlet port 22b is substantially the same as the pressure at the inlet port 22a. Moreover, the pressure difference narrows down, as the pressure at the inlet port 22a rises to its maximum.

Fig. 1d depicts the pressure at the outlet port 22b over the pressure at the inlet port 22a for a minimum load (i.e., a pressure at the load sensing port 22c at or below a lower limit). The corresponding graph 30 is divided into two straight parts. A lower part relating to a pressure at the inlet port 22a that is just above a lower limit, below which the pressure at the outlet port 22b is zero, and an upper part with a smaller pressure ratio (i.e. the ratio of the pressure at the outlet port 22b and the pressure at the inlet port 22a). Thus, higher pressures at the inlet port 22a are more drastically reduced than lower pressures, for relatively small vehicle loads. Nevertheless, a relatively higher vehicle load results in a relatively higher pressure at the outlet port 22b. Notably, as the pressure at the load sensing port 22c traverses the pressure region from the lower limit (c.f. Fig. 1d) to the upper limit (c.f. Fig. 1c), the pressure ratio may be subject to a smooth (e.g., continuous) transition.

Continuing with Fig. 1, the load sensing port 22c may be connected to an outlet port 32b of an electro-pneumatic valve 32. The electro-pneumatic valve 32 may have an inlet port 32a connected to a supply line 34 which supplies air at a substantially constant pressure. Moreover, the electro-pneumatic valve 32 may have an electrical interface 32c for receiving an electrical signal by wire 36, or wireless. The electro-pneumatic valve 32 may control the pressure at the outlet port 32b in accordance with the electrical signal. For example, the electrical signal may be an analog signal or a digital signal and the electro-pneumatic valve 32 may control the pressure at the outlet port 32b in accordance with a voltage applied to the electrical interface 23c or in accordance with a sequence of voltage levels that are interpreted as bits representing an indicator for the desired voltage at the outlet port 32b.

In another example, the electro-pneumatic valve 32 may control a difference between the pressure at the inlet port 32a and the pressure at the outlet port 32b in accordance with a voltage applied to the electrical interface 23c or in accordance with a sequence of voltage levels that are interpreted as bits representing an indicator for the desired voltage at the outlet port 32b. For example, the electro-pneumatic valve 32 may be a proportional valve. If the pressure at the inlet port 32a is constant and/or known, this may also allow to accurately control the pressure at the load sensing port 22c. Notably, a relatively higher load may be signaled by applying a relatively higher pressure to the load sensing port 22c but may also be signaled by applying a relatively lower pressure to the load sensing port 22c.

The electrical signal may be transmitted by a load measuring device that generates the signal representing the load based on measurements of a sensor, such as, for example, a piezoelectric, capacitive, or optical sensor. For instance, the load measuring device may comprise a microcontroller with one or more pins that allow receiving electrical signals representing measurements from one or more sensors. The microcontroller may be configured to map the measurements to the electrical signal that is to be transmitted to the electro-pneumatic valve 32. The mapping may be in the form of a look-up table or function stored in read-only memory, or may be learned by the microcontroller during a training phase. For example, the microcontroller may be preprogrammed with an initialization routine, in which the microcontroller adapts the mapping to the vehicle 12 by measuring the load when the vehicle 12 is empty and when the vehicle 12 is full and calculating the mapping based on the measured reference values.

In another example, the microcontroller may be configurable by an electronic device that enables a user of the device to input minimum and maximum load values as a reference for calculating the mapping, or to copy a preprogrammed mapping to a memory of the microcontroller. Similarly, the mapping may be adjusted at a later point in time, if a previously calculated or chosen mapping has been proven to be inappropriate. The microcontroller may also be configured to check a mapping against the measured load to avoid erroneous mappings. Moreover, the electronic device or the microcontroller may be provided with a preprogrammed routine for adapting the mapping to different terrains or typical operation speeds. For instance, a vehicle that is operated in a mountainous area at low speed may require another mapping than a vehicle operated in a plain region at high speed.

As shown in Fig. 1, all pneumatic actuators 14 braking the wheels 16 of a same axle may be connected by air lines 26, 26a to the same outlet port 22b of the load sensing valve 22 (or to different outlet ports 22b that are operated at the same pressure). Moreover, pneumatic actuators 14 braking wheels 16 of the same axle may be connected by air lines 26, 26a to outlet ports 22b of different load sensing valves 22. In that case, the loads acting upon both sides of the axle may be independently measures/determined. Moreover, if the vehicle 12 has two, three or more axles, the load on each axle or the load on each axle side may be independently measures/determined. In this case, multiple load sensing valves 22 (one for each axle, one for each axle side) may be operated in parallel. However, the signals provided by one or more load sensing devices may nevertheless be coordinated in a centralized or distributed fashion.

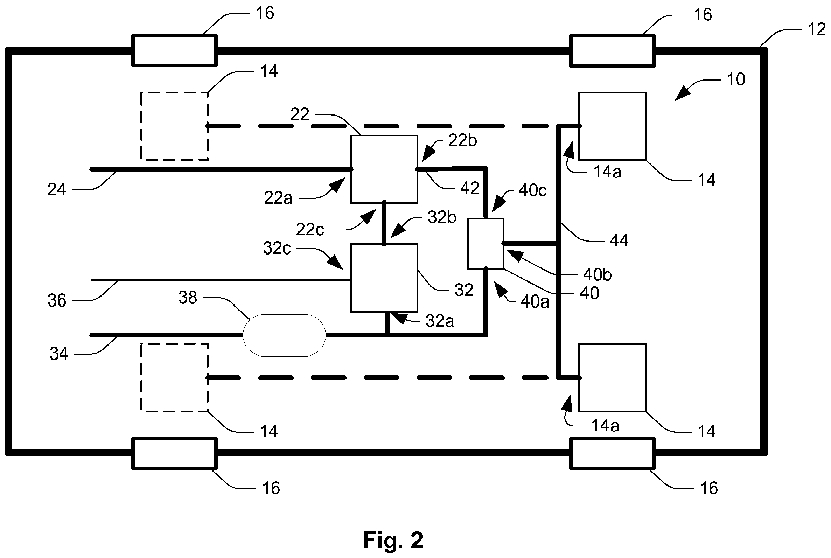

Fig. 2 shows further elements that may be added to the air brake system 10 of Fig. 1, as well as modifications that may (or may not) accompany the integration of said elements. As shown in Fig. 2, the air brake system 10 may further comprise a reservoir 38 for storing compressed air. The reservoir 38 may be connected to the supply line 34 and to the inlet port 32a of the electro-pneumatic valve 32. The supply line 34 may be coupled to a supply line of a towing vehicle or to a compressor. The air brake system 10 may further comprise a relay valve 40 for applying and releasing the pneumatic actuator 14. The relay valve 40 may be arranged between the reservoir 38 and the pneumatic actuator 14. A control port 40c for controlling a flow of compressed air from the reservoir 38 to the pneumatic actuator 14 may be connected to the outlet port 22b of the load sensing valve 22 via an air line 42.

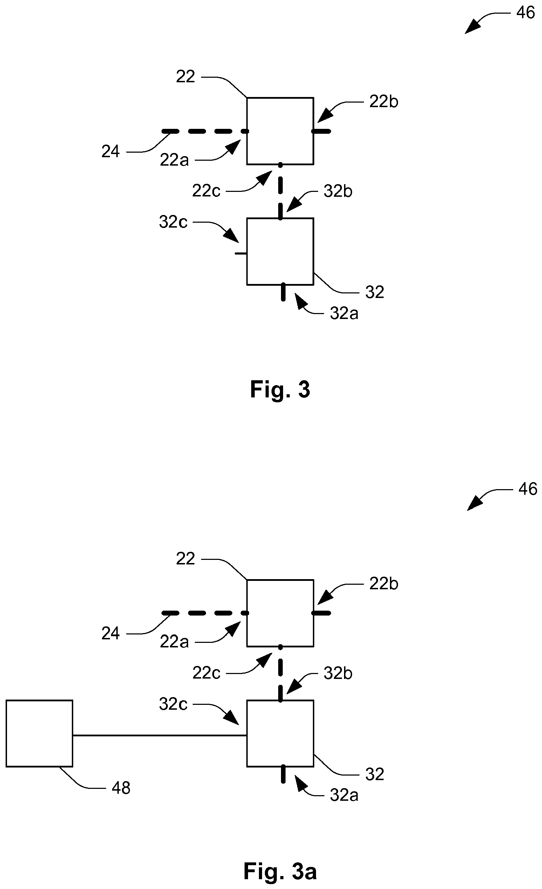

Fig. 3 schematically illustrates elements of a load sensing kit 46 for an air brake system 10. For example, the load sensing kit 46 may be provided for upgrading vehicles 12 (particularly nonsuspended vehicles 12) such that the upgraded air brake system 10 allows adjusting the braking force to a vehicle load, as described with reference to Fig. 1 and Fig. 2. The load sensing kit 46 may comprise the load sensing valve 22 and the electro-pneumatic valve 32. As shown in Fig. 3a, the load sensing kit 46 may also comprise the load measuring device 48 (and wiring to connect the load measuring device 48 to the electrical interface 32c of the electro-pneumatic valve 32).

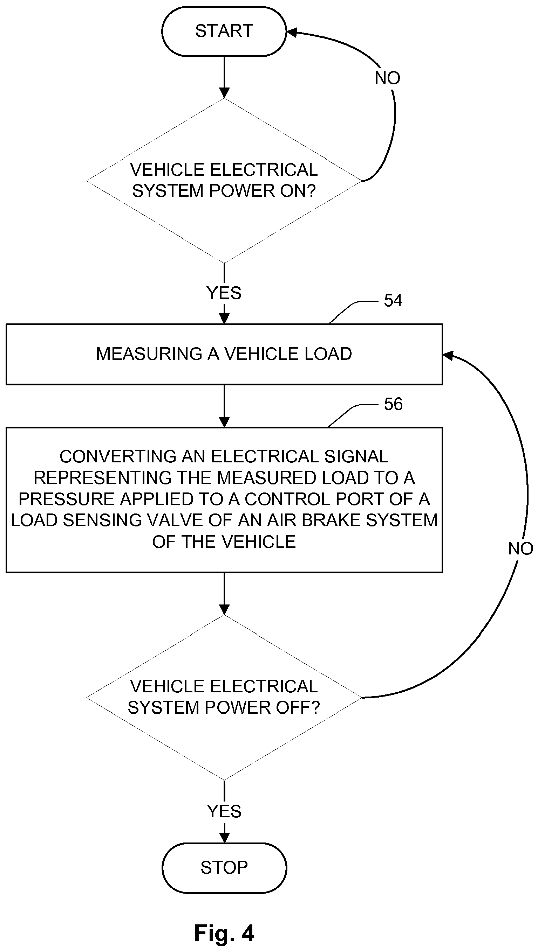

Fig. 4 shows a flow chart of a method of adjusting a braking force which is to be applied to the wheel 16 of the vehicle 12 upon braking the vehicle 12, to the vehicle load. When the vehicle electrical system is powered on, the load measuring device 48 starts measuring the vehicle load (which may comprise measuring the load acting on an axle, an axle side, or the wheel 16). The measured load is converted to an electrical signal provided by the load measuring device 48 to the electrical interface 32c of the electro-pneumatic valve 32. The electro-pneumatic valve 32 may then control the pressure at the load sensing port 22c of the load sensing valve 22 as described above.

### List of Reference Numerals (Part of Description)

- 10: air brake system
- 12: vehicle
- 14: pneumatic actuator
- 14a: port
- 14b: chamber (braking cylinder)
- 14c: piston
- 14d: friction element (brake shoes/brake pads)
- 16: wheel
- 16a: friction element (drum/disc)
- 18: drum brake
- 20: disc brake
- 22: load sensing valve
- 22a: inlet port
- 22b: outlet port
- 22c: control port (load sensing port)
- 24: control line
- 26: air line
- 26a: air line
- 28: graph (pressure outlet port over pressure inlet port) for maximum load
- 30: graph (pressure outlet port over pressure inlet port) for minimum load
- 32: electro-pneumatic valve
- 32a: inlet port
- 32b: outlet port
- 32c: electrical interface
- 34: supply line
- 36: wire
- 38: reservoir
- 40: relay valve
- 40a: inlet port
- 40b: outlet port
- 40c: control port
- 42: air line
- 44: air line
- 46: load sensing kit
- 48: load measuring device

## Claims

1. An air brake system (10) for braking a vehicle (12), comprising:
a pneumatic actuator (14) for braking a wheel (16) of the vehicle (12); and
a load sensing valve (22) for adapting a braking force to a load of the vehicle (12); wherein
the load sensing valve (22) has an inlet port (22a) connected to a control line (24), an outlet port (22b) connected to a control port (40c) of a relay valve (40) or the pneumatic actuator (14), and a load sensing port (22c) for controlling a difference in pressure between the inlet port (22a) and the outlet port (22b), based on the load of the vehicle (12);
**characterized in that**
the load sensing port (22c) is connected to an electro-pneumatic valve (32) which is configured to control a pressure at the load sensing port (22c) based on a signal from a load measuring device.

2. The air brake system (10) of claim 1, further comprising:
a reservoir (38) for storing compressed air; and
the relay valve (40) for applying and releasing the pneumatic actuator (14); wherein
the relay valve (40) is arranged between the reservoir (38) and the pneumatic actuator (14) and has the control port (40c) for controlling a flow of compressed air from the reservoir (38) to the pneumatic actuator (14).

3. The air brake system (10) of claim or 2, wherein the electro-pneumatic valve (32) has an inlet port (32a) connected to the reservoir (38) and an outlet port (32b) connected to the load sensing port (22c).

4. The air brake system (10) of any one of claims 1-3, wherein the electro-pneumatic valve (32) is a proportional valve.

5. The air brake system (10) of any one of claims 1-4, wherein the load sensing valve (22) allows controlling the relay valve (40) and/or applying the pneumatic actuator (14), even if the load sensing port (22c) is disconnected from the electro-pneumatic valve (32).

6. An nonsuspended vehicle (12), comprising an air brake system (10) of any one of claims 1-5.

7. The nonsuspended vehicle (12) of claim 6, wherein the nonsuspended vehicle (12) is an nonsuspended trailer.

8. The nonsuspended vehicle (12) of claim 7, wherein the reservoir (38) and the control line (24) are coupleable to a supply line and a control line, respectively, of a towing vehicle.

9. A load sensing kit (46) for an air brake system (10) of an nonsuspended vehicle (12), comprising:
a load sensing valve (22) with an inlet port (22a) that is coupleable to a control line (24), an outlet port (22b) that is coupleable to a control port (40c) of a relay valve (40) or a pneumatic actuator (14), and a load sensing port (22c) for controlling a difference in pressure between the inlet port (22a) and the outlet port (22b), based on a load of a vehicle (12);
**characterized by**
an electro-pneumatic valve (32) for controlling a pressure at the load sensing port (22c) based on a signal from a load measuring device (48).

10. The load sensing kit (46) of claim 9, further comprising the load measuring device (48), wherein the load measuring device is configured to measure a load and generate the signal, the signal representing the measured load.

11. A method of adjusting a braking force to be applied to a wheel (16) of a vehicle (12) upon braking the vehicle (12), to a vehicle load, comprising:
measuring the vehicle load; and
adjusting the braking force based on the measured load;
**characterized in that**
adjusting the braking force based on the measured load comprises converting an electrical signal representing the measured load to a pressure applied to a control port (22c) of a load sensing valve (22) of an air brake system (10) of the vehicle (12).

12. The method of claim 11, wherein adjusting the braking force comprises changing a braking force resulting from a same actuation of a brake pedal of the vehicle (12) or a towing vehicle towing the vehicle (12).

13. The method of claim 11 or 12, wherein adjusting the braking force comprises changing a gradient of a conversion between an actuation of a brake pedal of the vehicle (12) or a towing vehicle towing the vehicle (12), and the braking force.

14. The method of any one of claims 11-13, wherein measuring the vehicle load comprises measuring a fill level of the vehicle (12).

15. The method of any one of claims 11-14, wherein the air brake system (10) of the vehicle (12) comprises the load sensing kit of claim 9 or 10.
